# EUROPEAN PATENT APPLICATION

(11) **EP 1 589 721 A2**
(43) Date of publication of application: **26.10.2005**
(21) Application number: 05102826.4
(22) Date of filing: 11.04.2005
(51) Int. Cl.: H04L 29/06, H04L 12/24

(54) **A method of recognizing location move of VOIP phones and IP devices**

(30) Priority: 19.04.2004 GB 0408671
(71) Applicant: Mitel Networks Corporation, Ottawa, Ontario K2K 2W7 (CA)
(72) Inventor: Anzarouth, Ralph, Ottawa, Ontario K2J 2V3 (CA); Nason, Chris, Ottawa, Ontario K2T 1G2 (CA); Fodor, John, Ottawa, Ontario K2A 2X8 (CA); MacMaster, John, Kanata, Ontario K2L 1M3 (CA); Patry, Jean Yves, Gatineau, Quebec J9H 2E2 (CA); Fu, Shunqiu (Sue), Nepean, Ontario K2H 9L7 (CA); Herr, David, Ottawa, Ontario K2G 4M8 (CA); Szpilfogel, Christian, Ottawa, Ontario K1S 3N5 (CA); Kus, Ed, Ottawa, Ontario K4A 4R5 (CA)
(74) Representative: Read, Matthew Charles

(57) **Abstract**

A method is provided for tracking the physical location of IP phones and IP devices in a network. According to the invention, the IP phone or IP device detects its own current location and then informs the PBX controller or the location database to which it is connected. The capability is integrated in every IP phone and IP device. The PBX or location database then takes appropriate action, such as updating the ALI mapping for the phone or location information for the IP device.

## Description

### BACKGROUND OF THE INVENTION

### 1. Field of the Invention

The present invention relates generally to telephone systems and data systems, and more particularly to a method of tracking the physical location of VolP phones and IP devices in a closed environment.

### 2. Description of the Related Art

One of the benefits of VolP technology is that an IP phone can be moved from one physical location to another without administrator intervention to effect the change. Connectivity between the IP phone and PBX is via IP messaging over a data network. However, this increase in phone mobility gives rise to a lack of knowledge on the part of the administrator that the phone has been moved. This can lead to problems, particularly in maintaining accurate location information for E911 services.

Support of Emergency Services requires an Automatic Location Identification (ALI) number to be sent to a Public Safety Answering Point (PSAP) when an emergency service number (e.g. 911) is dialed. The PSAP uses the ALl to direct emergency personnel to the location of the call.

Thus, when a caller dials 911, a call is made to the PSAP office, and information regarding the phone's location is sent to the PSAP to allow emergency response professionals to locate the individual making the call. The location information is represented by a 10 digit number known as Automatic Location Identification (ALI).

Emergency Services support requires that the PBX system administrator maintain a map of directory numbers (DNs) to ALI numbers. If a telephone set is moved from one location to another (in a non-IP telephony system), the administrator is required to update various pieces of information in the system, one of these being the DN to ALI mapping.

However, as indicated above, IP phones can be physically moved from one network node to another, with no system administrator intervention (although this may not be encouraged by the administrator). When an IP phone is moved, its location may be different from the location referred to by the ALI that was originally programmed for it, resulting in out-of-date DN to ALI mappings. Therefore, it is important in IP telephony systems to recognize any move of an IP phone from an initial physical location to a new physical location.

Several prior art methods are known for determining the location of an IP phone in a data network. In a Dynamic Host Configuration Protocol (DHCP) environment it is possible to assign specific IP addresses in the DHCP server to be given out to certain physical locations. One disadvantage to this solution is that a large number of very granular DHCP servers are required, which is not economically or managerially practical.

Another alternative is to have the Layer 2 switch that the IP phone is connected to recognize which IP phone is connected to it and when the IP phone is disconnected. In this solution, the switch must be queried via Simple Network Management Protocol (SNMP) or Remote Monitoring (RMON) in order to retrieve this information.

Yet another alternative is the inclusion of a Global Positioning System (GPS) device within the phone or IP device to allow the GPS to track the physical location of the device. The expense of including such a GPS device within the IP phone or IP device would be prohibitive to gaining wide acceptance in the industry.

Yet another, albeit severe, alternative is to disallow any autonomous moves of the IP phone by preventing the IP phone from registering from any other location than the current location.

In wireless systems, the location of a Wireless Access Point (WAP) can be determined to locate the position of a cell phone. As a cell phone gets handed off to another WAP, the WAP's location can be communicated to the administrator. In a more advanced approach, the E911 ALI can be updated automatically to reflect the 911 caller's location.

The foregoing prior art solutions require external software systems to collect the location information, thereby contributing to complexity and expense. Moreover, the prior art solutions require additional hardware or expensive software to be added to the network, thereby adding to the cost of the overall system. In the SNMP case, an SNMP manager is required to continually query the connected Layer 2 switches to identify the subtending phones. The information is usually retrieved on a scheduled basis that does not allow for instantaneous recognition of a phone move. In the GPS case, expensive embedded transmitters and external systems would be required to achieve the same goals.

### SUMMARY OF THE INVENTION

According to the present invention, the IP phone (or other IP device) detects its own current location and then informs the PBX controller (or location database, if the IP device is not an IP phone) during the phone's registration phase or as soon as a change is detected. The capability is integrated in every IP phone. The PBX then takes appropriate action, such as updating the ALI mapping for the phone. One significant difference between the present invention and the prior art is that the location information is captured by the IP phone (which is best suited to know where it is). As a result, the method of the present invention is more reliable and provides more timely location information than the prior art. The method of the invention is also superior in that it uses no other external software systems to collect the location information.

One of the main applications of the method according to the present invention is to reduce the risk of having mismatching DN to ALI data, thereby assisting the system administrator in ensuring that each device has the correct ALI assigned to it, and that any unauthorized device moves are detected.

In this specification, an embodiment of the invention is set forth with reference to a method of detecting and tracking the physical location of a VolP Phone as a representative IP device. Although the described application (E911) is one that is particular to telephony, many other non-telephony related applications can benefit from this invention.

### BRIEF DESCRIPTION OF THE DRAWING

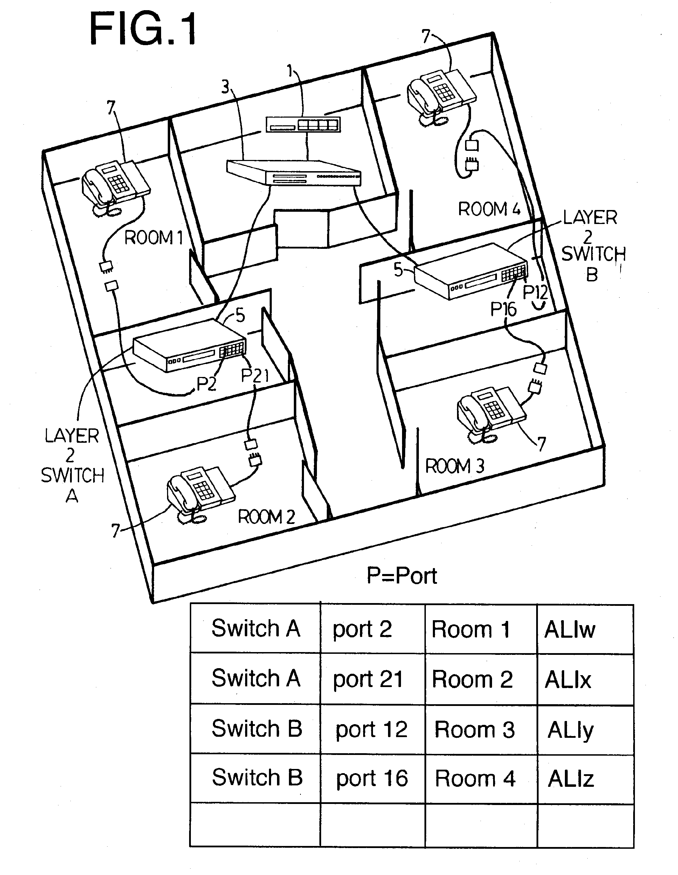

A detailed description of the preferred embodiment is provided herein below, with reference to Figure 1, which is a block diagram of an IP telephony system forming the operating environment for the method according to the present invention.

### DETAILED DESCRIPTION OF THE PREFERRED EMBODIMENTS

Figure 1 depicts a communications network environment (e.g. a LAN) within a building (or spread over a number of buildings via a WAN) having a plurality of network devices such as computers, printers, and IP phones (the computers, printers, etc. not being shown). An iPBX 1, such as the MN3000 Integrated Communications Platform (ICP) manufactured by Mitel Networks Inc. provides traditional PBX functionality along with advanced features, over a data network (e.g. LAN). The iPBX 1 is connected to a router 3 in a well-known manner. A plurality of IEEE Layer 2 switches 5, each having multiple ports, are disposed in various rooms and are connected to the router 3. A plurality of IP devices, such as IP phones 7, are connected to the L2 switches 5.

In order for the IP phones to recognize where they are connected in the network hierarchy, the LAN is programmed to issue either the IEEE 802.1 Spanning Tree Protocol, the standard global 802.1ab Link Layer Discovery Protocol, or any proprietary vendor global multicast protocol that advertises the L2 peer port numbers. Since the Spanning Tree Protocol (STP) and discovery protocols are not consistent across all vendors (i.e. some vendors transmit a unique MAC address on each port, while others transmit a single MAC address for the L2 switch and a port number for each port), capturing both the port MAC address and port number guarantees a unique address for the port to which an Ethernet cable (and therefore the phone 7 on the other end) is connected.

Each IP phone 7 is configured to capture packets transmitted over on the LAN in order to determine its IEEE Layer 2 peer connection. Alternatively the IP Phone 7 or IP Device can actively query its neighboring IEEE Layer 2 peer connection. Using this information, each IP phone 7 captures the physical port MAC address and port number of the L2 switch 5 to which it is connected. This information is communicated to the PBX during the standard registration process between the IP phone 7 and iPBX 1. Thus, when an IP phone 7 moves location, it will detect its new location and send that information to the iPBX 1, which then compares the information with the previous location information that was reported. However, it should be noted that the IP phones 7 do not send unsolicited L2 connectivity information to the iPBX until requested to by the iPBX 1. This information is only sent in response to a query from the iPBX 1 or as soon as possible after the query (e.g. in response to a registration request from the device, as discussed in greater detail below). If the iPBX detects a change in location, an appropriate information log is issued and appropriate application specific handling is invoked.

For example, in the case of E911 services, a new ALI is retrieved from a table that maps a Layer 2 MAC/port number to ALI, and the new ALI is assigned to the IP phone 7. The ALI can also be mapped to a geographical location such as building address, floor number and room number, pillar number, etc. This geographical location corresponds to the physical location of the RJ45 jack to which the IP phone 7 is connected. The RJ45 jack provides connection to the physical L2 port.

Following the first-time registration of a phone 7 with iPBX 1, the phone 7 advertises that it supports this Move Detection functionality to the iPBX 1. The iPBX 1 requests the L2 peer connectivity information. The phone will respond right away if possible, or send a negative acknowledgement if no info is available by the request's designated timeout (programmable). Once the phone 7 has been queried by the iPBX 1, any subsequent change in L2 peer connectivity will result in a message being sent to the PBX with the new data. The iPBX 1 records this L2 peer data in a new database table that maps DN to L2 port MAC and Port number. One example of such a database table is set forth in Table 1, below. The first-time registration data is recorded in the Last reported L2 port MAC and Port number fields, by DN (see DN numbers 1000 and 1001 as an example of first time registration). The device registration can be recorded in as a maintenance log (e.g.: "An IP device, with DN A, registered at L2 port MAC address B, Port C.")

**Table 1:**

| *DN to L2 Port MAC*/*Port mapping* | | | | | | | |
|---|---|---|---|---|---|---|---|
| DN | Date | Time | Previous L2 port MAC | Previous L2 Port | Last reported L2 port MAC | Last reported L2 Port | Move Acknow ledged |
| 1000 | 2003/Dec /01 | 15:18:18 | | | 00:07:00:1c: 0a:1a | 2 | |
| 1001 | 2003/Oct/ 11 | 02:04:17 | | | 00:07:00:1c: 0a:11 | 4 | |
| 1002 | 2003/Nov /21 | 18:52:28 | 00:07:00:1c :0a:1b | 3 | 00:07:00:1c: 0a:2a | 2 | No |
| 1003 | 2003/Oct/ 31 | 10:42:11 | 00:07:00:1c :0a:1d | 6 | 00:07:00:1c: 0a:11 | 4 | No |
| 1004 | 2003/Oct/ 22 | 18:24:09 | | | Unknown | Unknown | |
| 1005 | 2003/Dec /01 | 15:44:18 | | | not supported | Not supported | |
| | | | | | | | |

When a phone 7 is moved, it must re-register with the iPBX 1 and send in its new L2 MAC and Port data. The iPBX 1 detects this move by comparing the Last reported L2 MAC and Port for that DN (stored in the database) to the L2 MAC and Port just reported from the IP phone 7.

When the data sent from the IP phone 7 differs from the data in the database (due to the IP phone being physically moved,) the iPBX 1 copies the data in the "Last reported L2 port MAC" and "Port number " fields to the "Previous L2 port MAC" and "Port number" fields. The data passed from the IP phone 7 is copied to the Last reported L2 port MAC and Port number fields. Since this is a true device move, the field 'Move Acknowledged' is set to "No". Additionally, a warning-level maintenance log, recording the device move statistics, can be generated, such as: "The IP device, DN A, moved from L2 MAC B, Port C to L2 MAC X, Port Y" The log source is set to 'Device Move Detection' for this log, in order to allow the user to search through the Maintenance logs to find 'Device Detection' log types.

From the data presented in Table 1, the system administrator will be able to understand the following:

DN numbers 1000 and 1001 have undergone a first-time registration with the system, but have never been moved from their originally reported L2 port MAC and Port number. For an E911 application, the administrator does not need to update the ALI assignment table for these DNs.

DN 1002 has moved from one L2 switch to another, as evidenced by the Move Acknowledged field set to "No", and the different L2 port MAC addresses. For an E911 application, the administrator may want to manually update the ALI Assignment table.

DN 1003 has moved from one port to another on the same L2 switch, as evidenced by the Move Acknowledged field set to "No", and the different port numbers. For an E911 application, the administrator may want to manually update the ALI Assignment table.

DN 1004 is showing an 'unknown' Current L2 port MAC/Port number. This means that the IP phone's firmware does not support connectivity detection. The administrator may wish to investigate why the IP phone doesn't have the new firmware load.

DN 1005 is showing a 'not supported' status. This means that connectivity detection (e.g., Spanning Tree Protocol (STP), or LLDP, other proprietary discovery protocol) is not supported in the network. The administrator may wish to investigate why device connectivity isn't functional in the network.

In order to deal with device move detection in support of E911, the system administrator should monitor the Device Move Detection form/log to identify devices that may have moved. The regularity of monitoring depends on how often the system administrator suspects devices may be moved in his/her particular environment, and the corporate emphasis placed on accurate ALI information and/or detecting unauthorized device moves.

As discussed above, a key aspect of the invention is that the IP phones 7 monitor specific global L2 multicasts that it knows contain port numbering information. The packet header contains the unique source Port MAC and Port number. The IP phones 7 know how to parse the pertinent information of each protocol. A person of ordinary skill in the art of STP protocol would readily understand how to program IP phones 7 to snoop packets and parse the required information. The IP phones 7 are then queried by the iPBX 1 for the L2 peer information and in response send the appropriate data back to the iPBX.

The many features and advantages of the invention are apparent from the detailed specification and, thus, it is intended by the appended claims to cover all such features and advantages of the invention that fall within the sphere and scope of the invention.

It is assumed that the IP phones 7 are connected directly to Layer 2 switches 5, and not a shared hub medium. However, as long as the shared medium connects to a switch that has the type of protocols present as listed above, the administrator may choose to map the locations to the IP phones in the same area. Thus, where this specification refers to a plurality of data switches to which a plurality of IP phones are connected via respective phone jacks, it will be understood that the IP phones 7 may be connected to the switches 5 via a hub or other shared medium.

The primary application set forth herein is the accurate provision of E911 services. However, a person skilled in the art will also appreciate that by having the IP phones 7 detect their own physical location and report back in response to an iPBX query, many other applications are possible. One such application is inventory tracking. Location based emergency announcement is also possible since a broadcast facility can be used to send an announcement to all IP phones 7 at a given location. This announcement can be played live on a user's IP phone 7. Location based voicemail is also possible by which a voicemail message may be sent to all users at a given location. Also, location-based call center routing may be provided using the IP phone's current location to route a call. For example, if time zones are involved, a call can be routed to a call center in the same time zone as the caller.

Since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. In a network having a location database, and a plurality of data switches to which a plurality of IP devices are connected via respective data jacks identified by respective unique port MAC address and port numbers, a method of tracking the physical location of each IP device, comprising:
transmitting packets over the network indicative of device peer connectivity, including said port MAC address and port numbers;
snooping said packets transmitted over the network and capturing therefrom within each said IP device the port MAC address and port number of the switch to which each said IP device is connected; and
communicating said port MAC address and port number from each said IP device to said location database as a result of device registration of each said IP Device with said location database, whereby said location database is apprised of the physical location of each said IP device.

2. The method of claim 1, wherein said transmitting is in accordance with a multicast protocol that advertises said port MAC address and port numbers.

3. The method of claim 2, wherein said multicast protocol is IEEE 802.1 Spanning Tree Protocol.

4. The method of claim 2, wherein said multicast protocol is 802.1ab Link Layer Discovery Protocol.

5. The method of claim 2, wherein said multicast protocol is a proprietary vendor global multicast protocol.

6. The method of claim 1, wherein said capturing includes parsing said port MAC address and port number from the header of each of said packets.

7. The method of claim 1, wherein said querying includes parsing said port MAC address and port number from the header of each of said packets.

8. The method of claim 1, further including the steps of maintaining a record of the physical location of each said IP device and in the event of any change in said location generating an information log for invoking appropriate application specific handling.

9. The method of claim 8, wherein at least one of said IP devices is an IP phone, and wherein said location database is incorporated within an iPBX.

10. The method of claim 9, wherein said maintaining includes recording IP phone registration data in a database table that maps each iPBX Directory Number (DN) to a corresponding Layer 2 Switch port MAC address and port number.

11. The method of claim 8, wherein said maintaining includes recording IP Device registration data in a database table that maps each IP Device identifier to a corresponding Layer 2 switch port MAC address and port number.

12. The method of claim 10 wherein said iPBX detects a change in said location by comparing a previously stored port MAC address and port number for mapped to a corresponding DN stored in said database to a current port MAC address and port number communicated by said IP phone to said iPBX.

13. The method of claim 11 wherein said location database detects a change in said location by comparing a previously stored port MAC address and port number for mapped to a corresponding Device identifier stored in said database to a current port MAC address and port number communicated by said IP Device to said location database.

14. The method of claim 9, wherein said appropriate application specific handling includes automatically retrieving a new Automatic Location Identifier (ALI) number from a table that maps each of said port MAC address and port numbers to respective ALI numbers, and assigning said new ALI number to each said IP phone that has moved location.

15. The method of claim 8, wherein said appropriate application specific handling includes inventory tracking.

16. The method of claim 9, wherein said appropriate application specific handling includes location based emergency announcement.

17. The method of claim 9, wherein said appropriate application specific handling includes location based voicemail.

18. The method of claim 9, wherein said appropriate application specific handling includes location-based call center routing.

19. A method of tracking an IP device in a network comprising a location database and at least one data switch to which one or more IP devices are connected via a port, said port being is identifiable by a respective unique port identifier, comprising:
transmitting packets over the network indicative of device peer connectivity, including said identifier;
snooping said packets transmitted over the network and capturing therefrom within said IP device the identifier of the port to which said IP device is connected; and
communicating said identifier from each said IP device to said location database.

20. An iPBX for use in a network comprising at least one data switch to which one or more IP devices are connected via a port, said port being identifiable by a respective unique port identifier, the iPBX comprising:
a location database;
means for receiving an indication of the identifier of the port to which one of said IP devices is connected and storing said identifier in the location database.

21. A method according to claim 19 or an iPBX according to claim 20, wherein said identifier comprises a MAC address.

22. A method according to claim 21 or an iPBX according to claim 21, wherein said identifier comprises a port number.
